# EUROPÄISCHE PATENTANMELDUNG

(11) **EP 4 756 403 A1**
(43) Veröffentlichungstag der Anmeldung: **10.06.2026**
(21) Anmeldenummer: 24217812.7
(22) Anmeldetag: 05.12.2024
(51) Int. Cl.: G01N 3/08, G01M 5/00

(54) **VERFAHREN ZUM TESTEN VON FASERVERSTÄRKTEN KOMPONENTEN**

(71) Anmelder: Wobben Properties GmbH, 26607 Aurich (DE)
(72) Erfinder: HESSE, Ingo, 26632 Ihlow (DE); OPPENBORN, Werner, 26629 Großefehn (DE); GRAVEMANN, Andrea, 26725 Emden (DE)
(74) Vertreter: Eisenführ Speiser

(57) **Zusammenfassung**

Es wird ein Verfahren zum Testen einer Probe (300) einer faserverstärkten KunststoffKomponente einer Windenergieanlage mittels einer Prüfmaschine (500) und einer Knickstütze (200) vorgesehen. Dazu erfolgt ein Auftragen eines ersten Aufleimers (410) mit einem ersten und einem zweiten Ende (411, 412) auf einer ersten Seite (310) der Probe (300) und eines zweiten Aufleimers (420) mit einem ersten und einem zweiten Ende (421, 422) auf einer Innenseite oder einer Klemmfläche (211) einer Klemmplatte (210) der Knickstütze (200). Das erste Ende (411) des ersten Aufleimers (410) kann eine erste Verjüngung und das erste Ende (421) des zweiten Aufleimers (420) kann eine zweite Verjüngung aufweisen, so dass ein Verjüngungsbereich (430) entsteht. Die Probe (300) wird in die Knickstütze (200) eingespannt, wobei der erste und zweite Aufleimer (410, 420) aufeinander platziert sind.

## Beschreibung

Die vorliegende Erfindung betrifft ein Verfahren zum Testen von faserverstärkten Komponenten, insbesondere für eine Windenergieanlage.

Faserverstärkte Komponenten bilden einen wichtigen Anteil für Komponenten einer Windenergieanlage, insbesondere für die Rotorblätter der Windenergieanlage.

Um unter anderem die generellen Materialeigenschaften von faserverstärkten Kunststoffen und um den Einfluss von z. B. Produktionseinflüssen auf die faserverstärkten Komponenten bestimmen zu können, müssen diese Komponenten getestet werden. Hierzu wird beispielsweise bei einer Druckbelastung eine Knickstütze verwendet, welche ein seitliches Ausweichen der Probe unter Stauchung verhindern soll.

Es ist eine Aufgabe der vorliegenden Erfindung, ein verbessertes Verfahren zum Testen von faserverstärkten Komponenten einer Windenergieanlage vorzusehen.

Diese Aufgabe wird durch ein Verfahren zum Testen von faserverstärkten Komponenten einer Windenergieanlage nach Anspruch 1 gelöst.

Somit wird ein Verfahren zum Testen einer Probe einer faserverstärkten Kunststoff-Komponente einer Windenergieanlage mittels einer Prüfmaschine und einer Knickstütze vorgesehen. Dazu erfolgt ein Auftragen eines ersten Aufleimers mit einem ersten und einem zweiten Ende auf einer ersten Seite der Probe und eines zweiten Aufleimers mit einem ersten und einem zweiten Ende auf einer Innenseite oder einer Klemmfläche einer Klemmplatte der Knickstütze. Das erste Ende des ersten Aufleimers kann eine erste Verjüngung und das erste Ende des zweiten Aufleimers kann eine zweite Verjüngung aufweisen, so dass ein Verjüngungsbereich entsteht. Die Probe wird in die Knickstütze eingespannt, wobei der erste und zweite Aufleimer aufeinander platziert sind.

Die Prüfmaschine kann eine Druckprüfmaschine darstellen.

Gemäß einem Aspekt ist der Verjüngungsbereich zumindest teilweise mit einem Füllmaterial, insbesondere Klebstoff verfüllt.

Gemäß einem weiteren Aspekt kann das erste Ende des ersten Aufleimers über ein Ende der Klemmplatte hinausragen.

Mit der Knickstütze gemäß der Erfindung können Proben aus faserverstärkten Laminaten in einer Ermüdungsprüfung geprüft werden.

Insbesondere kann die Knickstütze zur Ermüdungsprüfung von Proben aus faserverstärktem Kunststoff mit konstantem und mit nicht konstantem Querschnitt verwendet werden. Somit können die Proben mit Imperfektion geprüft werden, um den Einfluss der Imperfektion auf die Probe zu quantifizieren.

Somit kann eine Prüfung von realitätsnahem Laminat aus faserverstärktem Kunststoff im Druckbereich erfolgen.

Mit der Knickstütze können faserverstärkte Komponenten mit nicht konstantem Querschnitt oder Dicke, beispielsweise ein Plydrop oder eine Welle aus einem faserverstärkten Kunststoff, geprüft werden.

Eine Knickstütze stellt eine Vorrichtung dar, die ein seitliches Ausweichen der Probe unter Stauchung verhindern soll.

Gemäß einem Aspekt der Erfindung ist der erste Aufleimer optional.

Es wird gemäß einem Aspekt ein Verfahren zum Prüfen einer Probe aus einem FaserVerbund-Kunststoff mittels einer Knickstütze vorgesehen. Die Knickstütze kann ein erstes und zweites Ende und eine Kontaktfläche oder Klemmfläche aufweisen. Ein innerer und äußerer Aufleimer kann auf die Probe und/oder eine Klemmfläche der Knickstütze aufgetragen werden. Ab einem ersten Bereich oder ersten Stelle hin verjüngen sich erste Enden der Aufleimer. Zum Durchführen der Tests kann die Probe mit dem inneren und äußeren Aufleimer in der Knickstütze platziert werden.

Der Verjüngungsbereich kann aufgrund der Verjüngungen der ersten Enden des ersten und zweiten Aufleimers V-förmig ausgestaltet sein und kann mit Klebstoff verfüllt werden.

Optional kann der erste Aufleimer auf die Probe auflaminiert werden und der zweite Aufleimer kann mit dem ersten Aufleimer oder der Probe verklebt werden.

Optional kann der erste und zweite Aufleimer parallel zur Probe angeordnet sein. Der erste und zweite Aufleimer kann flach ausgestaltet sein.

Optional kann ein Keil im Bereich des ersten Endes / der Kontaktflächen vorgesehen sein.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt einen schematischen Querschnitt einer Knickstütze und einer Probe,
- Fig. 2: zeigt einen schematischen Querschnitt einer Knickstütze, und
- Fig. 3: zeigt eine schematische Darstellung der Knickstütze, welche in eine Prüfmaschine eingespannt ist.

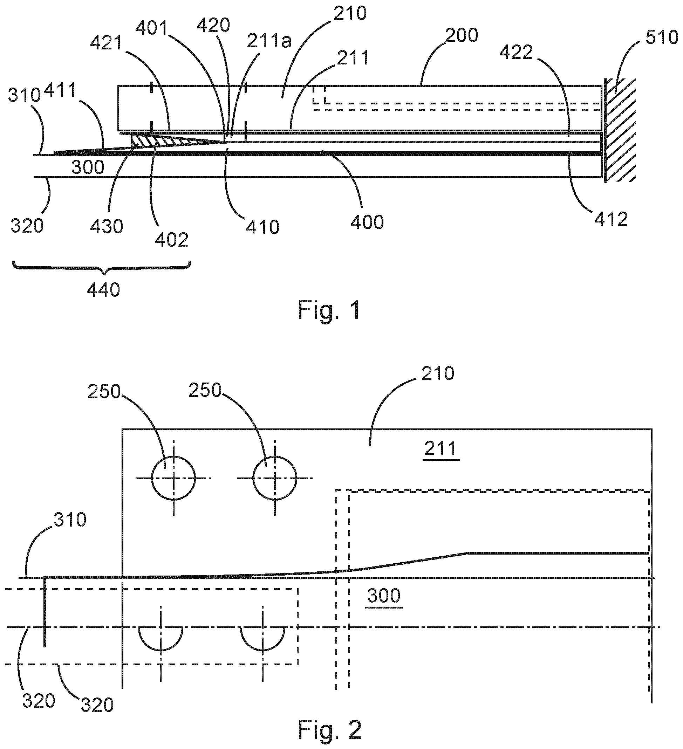

Fig. 1 zeigt einen schematischen Querschnitt einer Knickstütze und einer Probe. Die Knickstütze 200 weist mindestens eine Klemmplatte 210 jeweils mit einer Klemmfläche 211 auf. Die Klemmfläche 211 stellt einen Kontakt zur Probe her. Mittels der Klemmflächen 211 kann eine Probe 300 in der Knickstütze 200 eingeklemmt werden. Die Knickstütze 200 stellt eine Vorrichtung dar, die ein seitliches Ausweichen der Probe 300 unter Stauchung verhindern soll. Zur Verbesserung der Kraftübertragung von den Klemmflächen 211 auf die Probe 300 kann ein Übergang 400 dazwischen vorgesehen sein. Der Übergang 400 kann durch einen ersten und/oder zweiten Aufleimer 410, 420 ausgestaltet sein. Der erste Aufleimer 410 weist ein erstes und ein zweite Ende 411, 412 auf. Der zweite Aufleimer 420 weist ein erstes und ein zweite Ende 421, 422 auf. Der zweite Aufleimer 420 ist an der Klemmfläche 211 vorgesehen. Der zweite Aufleimer 420 ist an einer ersten Seite 310 der Probe 300 vorgesehen. Damit liegen der erste und zweite Aufleimer 410, 420 aufeinander oder aneinander, wenn die Probe 300 durch die Knickstütze 200 eingespannt ist. Die jeweiligen ersten Enden 411, 421 sind verjüngend ausgestaltet. Ab einer Stelle 401 des Übergangs 400 können sich das erste Ende 411 des ersten Aufleimers 410 und das erste Ende 421 des zweiten Aufleimers 420 jeweils verjüngen. Das erste Ende 421 des zweiten Aufleimers 420 erstreckt sich von der Stelle 420 bis zum Ende 211a der Klemmfläche 211. Das erste Ende 411 des ersten Aufleimers 410 erstreckt sich von der Stelle 420 bis über das Ende 211a der Klemmfläche 211 hinaus. Optional können die zweiten Enden 412, 422 des ersten und zweiten Aufleimers 410, 420 an einem Spannzeugboden 510 anliegen. Der Verjüngungsbereich 440 zwischen den sich verjüngenden ersten Enden 411, 421 kann optional zumindest teilweise mit einem Klebstoff 430 aufgefüllt werden.

Der erste und zweite Aufleimer 410, 420 können parallel zueinander angeordnet sein. Der erste und zweite Aufleimer 410, 420 können aufgeklebt oder auflaminiert werden.

Mit dem Übergang 400 zwischen der Knickstütze 200 und der Probe 300 kann ein kerbarmer Übergang realisiert werden.

Durch die Verjüngungen der ersten Enden 411, 421 des ersten und zweiten Aufleimers 410, 420 kann eine abrupte Lastübertragung oder Laständerung vermieden werden.

Fig. 2 zeigt einen schematischen Querschnitt einer Knickstütze. Die Klemmplatten 211 können mittels Bohrungen 250 verspannt oder verschraubt werden.

Gemäß einem Aspekt der Erfindung wird ein Verfahren zum Testen einer Probe aus einem faserverstärken Kunststoff mittels einer Prüfmaschine und einer Knickstütze vorgesehen. Ein optionaler erster Aufleimer mit einem ersten und einem zweiten Ende wird auf einer ersten Seite der Probe aufgetragen. Ein zweiter Aufleimer mit einem ersten und einem zweiten Ende wird auf einer Innenfläche einer Knickstütze bzw. einer Klemmfläche aufgetragen. Das erste Ende des ersten Aufleimers weist eine erste Verjüngung und/oder das erste Ende des zweiten Aufleimers weist eine zweite Verjüngung auf. Die Probe wird in die Knickstütze eingespannt, wobei der zweite Aufleimer auf dem ersten optionalen Aufleimer platziert ist.

Die Prüfmaschine kann als Druck-Prüfmaschine ausgestaltet sein.

Die Kontaktfläche zwischen Aufleimer und Knickstütze und die Kontaktfläche zwischen Aufleimer und der Probe sind so groß wie möglich. Es wird ein kerbarmer Übergang von dem Aufleimer in den Prüfbereich erreicht. Dies kann erfolgen, ohne dabei die Nutzbarkeit der Knickstütze zu reduzieren.

Somit können Kräfte, die sonst kritisch wären (bei der Übertragung von der Kontaktfläche auf den Aufleimer und von dem Aufleimer zur Probe) sicher auf die Probe übertragen werden. Dies wird erreicht, indem die Kontaktfläche bzw. die Klemmfläche insbesondere kerbarm von den Aufleimern zur Probe vergrößert wird.

Der erste optionale Aufleimer an der Probe kann über das Ende der Klemmplatte bzw. Klemmfläche hinausreichen, so dass die Kraft besser auf die Probe übertragen werden kann.

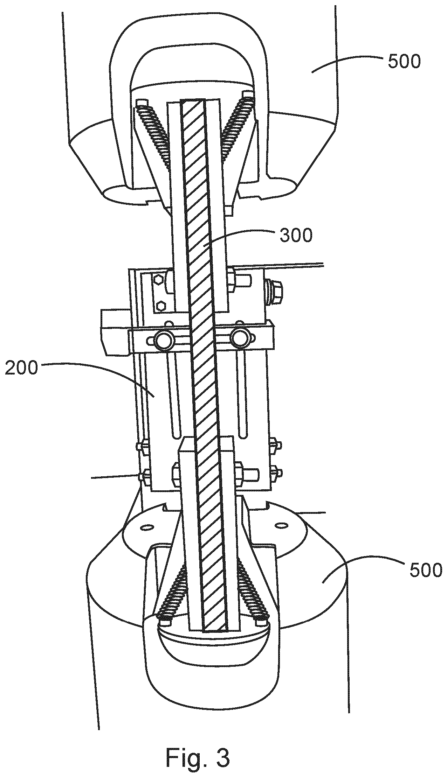

Fig. 3 zeigt eine schematische Darstellung der Knickstütze, welche in einer Prüfmaschine, insbesondere einer Druckprüfmaschine, 400 eingespannt ist und Fig. 5 zeigt eine schematische Darstellung einer Probe 300, welche mittels der Knickstütze 200 in einer Prüfmaschine 500 eingespannt ist.

### Bezugszeichenliste

- 200: Knickstütze
- 210: Klemmplatte
- 211: Klemmfläche
- 211a: Klemmflächenende
- 400: Übergang
- 401: Stelle
- 402: Bereich
- 410: erster Aufleimer
- 411: erstes Ende
- 412: zweites Ende
- 420: zweiter Aufleimer
- 421: erstes Ende
- 422: zweites Ende
- 430: Füllmaterial
- 440: Verjüngungsbereich
- 500: Prüfmaschine
- 510: Spannzugboden

## Patentansprüche

1. Verfahren zum Testen einer Probe (300) einer faserverstärkten Kunststoff-Komponente einer Windenergieanlage mittels einer Prüfmaschine (500), insbesondere einer Druck-Prüfmaschine, und einer Knickstütze (200), mit den Schritten:
Auftragen eines ersten Aufleimers (410) mit einem ersten und einem zweiten Ende (411, 412) auf einer ersten Seite (310) der Probe (300),
Auftragen eines zweiten Aufleimers (420) mit einem ersten und einem zweiten Ende (421, 422) auf einer Klemmfläche (211) einer Klemmplatte (210) der Knickstütze (200),
wobei das erste Ende (411) des ersten Aufleimers (410) eine erste Verjüngung und das erste Ende (421) des zweiten Aufleimers (420) eine zweite Verjüngung aufweist, so dass ein Verjüngungsbereich (430) entsteht, und
Einspannen der Probe (300) in die Knickstütze (200), wobei der erste und zweite Aufleimer (410, 420) aufeinander platziert ist.

2. Verfahren nach Anspruch 1, wobei
der Verjüngungsbereich (430) zumindest teilweise mit einem Füllmaterial, insbesondere Klebstoff (440), verfüllt ist.

3. Verfahren nach Anspruch 1 oder 2, wobei
das erste Ende (411) des ersten Aufleimers (410) über ein Ende der Klemmplatte (210) hinausragt.

4. Verfahren zum Testen einer Probe (300) einer faserverstärkten Kunststoff-Komponente einer Windenergieanlage mittels einer Prüfmaschine (500) und einer Knickstütze (200) mit einer Klemmplatte (210), mit den Schritten:
Auftragen eines zweiten Aufleimers (420) mit einem ersten und einem zweiten Ende (421, 422) auf einer Klemmfläche (211) der Klemmplatte (210) der Knickstütze (200),
wobei das erste Ende (421) des zweiten Aufleimers (420) eine zweite Verjüngung aufweist, so dass ein Verjüngungsbereich (430) entsteht, und
Einspannen der Probe (300) in die Knickstütze (200).
